# FASCICULE DE BREVET EUROPEEN

(11) **EP 4 422 117 B1**
(45) Date de publication et mention de la délivrance du brevet: **23.07.2025**
(21) Numéro de dépôt: 24158684.1
(22) Date de dépôt: 20.02.2024
(51) Int. Cl.: H04L 9/00

(54) **PROCÉDÉ DE SÉLÉCTION D'UNE VALEUR PARMI DEUX VALEURS ENREGISTRÉES DANS DEUX REGISTRES DIFFÉRENTS**
VERFAHREN ZUR AUSWAHL EINES WERTES ZWISCHEN ZWEI IN ZWEI VERSCHIEDENEN REGISTERN GESPEICHERTEN WERTEN
METHOD FOR SELECTING ONE OF TWO VALUES STORED IN TWO DIFFERENT REGISTERS

(30) Priorité: 22.02.2023 FR 2301610
(43) Date de publication de la demande: 28.08.2024
(73) Titulaire: STMicroelectronics International N.V., 1228 Plan-les-Ouates, Geneva (CH)
(72) Inventeur: SIMON, Thierry, WEZEMBEEK-OPPEM 1970 (BE)
(74) Mandataire: Casalonga

(56) Documents cités:
- US-A1- 2021 194 689
- US-A1- 2021 306 134

## Description

Des modes de réalisation et de mise en œuvre concernent les systèmes informatiques, notamment un procédé de sélection d'une valeur parmi deux valeurs enregistrées dans deux registres différents du système informatique à partir d'un bit de sélection.

Certaines applications d'un système informatique requièrent de sélectionner une valeur parmi deux valeurs enregistrées dans deux registres différents de ce système informatique. Cette sélection de valeur peut être réalisée à partir d'un bit de sélection que l'utilisateur souhaite maintenir secret.

En particulier, la sélection d'une valeur parmi deux valeurs stockées dans deux registres différents peut être réalisées dans le cadre de procédés de cryptographie. Par exemple, des algorithmes calculant une exponentiation modulaire dans un corps fini ou une multiplication scalaire sur une courbe elliptique peuvent mettre en œuvre une telle sélection. Ces algorithmes sont utilisés dans les cryptosystèmes « RSA » et « ElGamal », les algorithmes « DSA » (acronyme de l'anglais « Digital Signature Algorithm ») et « ECDSA » (acronyme de l'anglais « Elliptic curve digital signature algorithm ») et le protocole « ECDH » (acronyme de l'anglais « Elliptic-curve Diffie-Hellman »). Le bit de sélection est par exemple un bit d'une clé cryptographique que l'utilisateur souhaite maintenir secret.

Par ailleurs, la manipulation de données dans un système informatique peut entraîner un changement de la consommation d'énergie de l'unité de traitement réalisant cette manipulation de données.

La manipulation des données peut aussi entraîner un changement de temps d'exécution selon les données manipulées. En particulier, un système informatique peut utiliser une mémoire cache. Cette mémoire cache peut stocker temporairement des données. L'accès aux données stockées en cache est réalisé plus rapidement que l'accès aux données stockées dans une mémoire pour laquelle la mémoire cache sert d'intermédiaire.

La manipulation des données peut aussi entraîner un changement du champ électromagnétique de l'unité de traitement manipulant les données.

Ces changements sont des exemples d'observations physiques utilisables par un attaquant souhaitant récupérer des informations du système informatique. Ces observations sont désignées par l'expression « attaque par canal auxiliaire » (en anglais « Side-channel attack »)

En particulier, un attaquant peut chercher à connaître la valeur du bit de sélection utilisé pour sélectionner une valeur parmi deux valeurs enregistrées dans des registres différents. Or, la sélection de valeur parmi deux valeurs enregistrées dans deux registres différents est réalisée en exécutant des instructions informatiques qui peuvent par exemple entraîner des changements de consommation d'énergie et/ou de temps d'exécution ou de champs électromagnétique. Ces changements peuvent être observés par un attaquant. L'observation de ces changements peut permettre à l'attaquant de déterminer la valeur du bit de sélection.

Ainsi, par exemple, dans le cadre des méthodes de cryptographie précédemment citées, l'attaquant peut observer les changements pour déterminer chaque bit de la clé cryptographique. Cela permet à l'attaquant de récupérer la clé cryptographique qu'il peut ensuite utiliser de manière malveillante.

On connaît plusieurs solutions permettant de réaliser une sélection entre deux valeurs enregistrées dans différents registres.

Une première solution connue consiste à implémenter une fonction si-alors-sinon (en anglais « if-then-else ») dans laquelle la condition évaluée est la valeur du bit de sélection.

L'implémentation de la fonction si-alors-sinon utilise des séquences d'instructions qui sont différentes selon la valeur du bit de sélection. Ces séquences d'instructions peuvent résulter en un temps d'exécution différent, en une consommation d'énergie différente ou encore en un champs magnétique différent. De ce fait, un attaquant peut déterminer la valeur du bit de sélection en fonction de ses observations.

Une deuxième solution consiste à mettre lesdites deux valeurs dans un tableau, puis à accéder dans le tableau à la valeur sélectionnée à partir de la valeur du bit de sélection. Cette solution peut impliquer l'utilisation d'une mémoire cache lors des accès mémoire réalisés selon la valeur du bit de sélection. L'utilisation de la mémoire cache peut modifier les temps d'accès des accès mémoires selon la valeur du bit de sélection. Sur une architecture supportant un cache, il est dès lors possible pour un attaquant de retrouver la valeur du bit de sélection selon les temps d'accès à la mémoire observés.

Une troisième solution consiste à utiliser un masque sur les valeurs à sélectionner, le masque utilisé dépendant du bit de sélection. Par exemple, sur une architecture 32 bits, le masque peut avoir pour valeur 0xFFFFFFFFF ou 0x00000000 selon la valeur du bit de sélection. Néanmoins, ces masques présentent des poids de Hamming (nombre de bits à 1) très éloignés. Ainsi, la consommation d'énergie pour l'utilisation de ces masques peut varier fortement selon le masque sélectionné. Si la différence de consommation d'énergie due à l'utilisation des masques est suffisante pour être observée, un attaquant peut retrouver la valeur du bit de sélection.

Une quatrième solution est décrite dans la demande de brevet US publiée sous le numéro n°2021/306134. Cette solution utilise des masques présentant un même poids de Hamming sur une architecture 32 bits. En particulier, les masques correspondent à une alternance de bits à 1 et de bits à 0. En particulier, les masques ont pour valeur 0xAAAAAAAA ou 0x55555555 selon la valeur du bit de sélection. La valeur du masque est obtenue en effectuant ou en n'effectuant pas un décalage vers la droite d'un bit de la valeur 0xAAAAAAAA selon la valeur du bit de sélection. Si le décalage a lieu, les 32 bits du registre changent simultanément de valeur. Dans le cas contraire, aucun bit ne change de valeur. Une telle différence peut également engendrer une variation de consommation d'énergie importante selon le matériel (« hardware ») considéré. Si la différence de consommation d'énergie due à l'utilisation des masques est suffisante pour être observée, un attaquant peut retrouver la valeur du bit de sélection.

Il existe donc un besoin de proposer une solution permettant de sélectionner une valeur parmi deux valeurs stockées dans deux registres différents de manière simple et discrète pour être notamment robuste contre les attaques par canal auxiliaire.

Selon un aspect, il est proposé un procédé mis en œuvre par ordinateur -notamment par un système informatique tel que décrit dans la suite, par exemple un système sur puce- de sélection d'une valeur parmi deux valeurs enregistrées dans deux registres différents à partir d'un bit de sélection, le procédé comprenant :
- une concaténation des deux valeurs enregistrées dans les deux registres de manière à obtenir un mot concaténé présentant lesdites deux valeurs dans deux portions distinctes du mot concaténé, puis
- une rotation dudit mot concaténé selon la valeur du bit de sélection de manière à positionner la valeur sélectionnée dans une portion donnée du mot concaténé parmi lesdites deux portions, puis
- une suppression de la valeur non sélectionnée dans le mot concaténé de manière à conserver uniquement la valeur sélectionnée dans le mot concaténé en éliminant la valeur non sélectionnée du mot concaténé.

Un tel procédé de sélection présente l'avantage d'être implémenté par une séquence d'instructions indépendantes de la valeur du bit de sélection et ne contient pas d'accès mémoire dépendants du bit de sélection.

En particulier, un tel procédé de sélection présente l'avantage d'être robuste contre les attaques par canal auxiliaire.

De préférence, ladite suppression de la valeur non sélectionnée dans le mot concaténé comprend un décalage du mot concaténé de manière à conserver uniquement la valeur sélectionnée dans le mot concaténé en éliminant la valeur non sélectionnée du mot concaténé.

Avantageusement, la concaténation permet de concaténer deux valeurs sur 16 bits de manière à obtenir un mot concaténé de 32 bits dans lequel les deux valeurs sont comprises dans deux portions de 16 bits du mot concaténé.

Dans un mode de mise en œuvre avantageux, ladite rotation dudit mot concaténé comprend :
- une première rotation du mot concaténé selon un nombre M de bits prédéterminé, M étant différent de 0 et d'un multiple de 16, puis
- une deuxième rotation du mot concaténé selon un nombre de bits dépendant du bits de sélection de manière à obtenir la valeur sélectionnée sur ladite portion donnée.

Le fait de réaliser une rotation en deux temps permet d'éviter d'effectuer une rotation de 0 bit lorsque le bit de sélection est 0. Une telle rotation, ne modifiant pas la valeur contenue dans le registre pourrait en effet être observable par un attaquant.

Avantageusement, le nombre de bits de décalage pour la deuxième rotation est déterminé en réalisant :
- une fonction logique OU entre la valeur du bit de sélection et une valeur égale à 0xN0000000 où N est compris entre 1 et F en système hexadécimal et est défini par rapport au nombre M de bits prédéterminé pour la première rotation, puis
- une rotation de 28 bits sur la valeur obtenue par la fonction logique OU de manière à obtenir une valeur du nombre de bits de décalage pour la deuxième rotation.

Selon un autre aspect, il est proposé un produit programme d'ordinateur comprenant des instructions qui, lorsque le programme est exécuté par un ordinateur, conduisent celui-ci à mettre en œuvre un procédé de sélection tel que décrit précédemment.

Selon un autre aspect, il est proposé un système informatique comprenant :
- une mémoire dans laquelle est stocké un produit programme d'ordinateur tel que décrit précédemment, et
- une unité de traitement configurée pour exécuter ledit produit programme d'ordinateur.

En particulier, l'unité de traitement présente une architecture supportant une rotation du contenu de registre.

D'autres avantages et caractéristiques de l'invention apparaîtront à l'examen de la description détaillée de modes de réalisation, nullement limitatifs, et des dessins annexés sur lesquels :
[Fig 1]

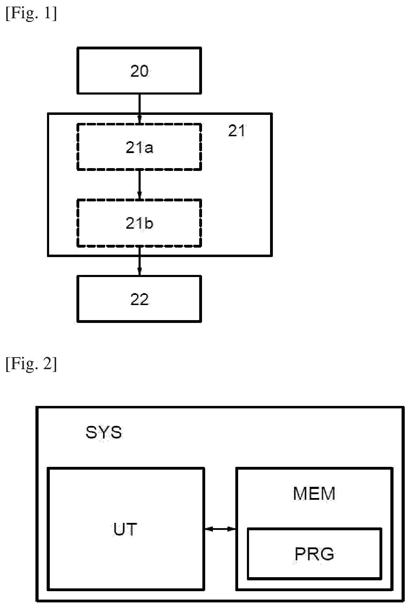

[Fig 2] illustrent des modes de réalisation et de mise en œuvre de l'invention.

La figure 1 illustre un mode de mise en œuvre d'un procédé, mis en œuvre par ordinateur (notamment par un système informatique tel que décrit dans la suite), de sélection d'une valeur parmi deux valeurs enregistrées dans deux registres différents de l'ordinateur à partir d'un bit de sélection.

Le bit de sélection est stocké dans un registre de l'ordinateur. Ce bit de sélection est un bit de sélection secret.

Chacune de ces valeurs peut être représentée sur 16 bits. En variante, chacune de ces valeurs peut être représentée sur 32 bits.

Lorsque chaque valeur est représentée sur 32 bits, les étapes du procédé de sélection décrites ci-dessous sont réalisées une première fois sur les 16 bits de poids fort de chaque valeur puis une deuxième fois sur les 16 bits de poids faible de chaque valeur, ou inversement.

En d'autres termes, les étapes du procédé sont réalisées une première fois pour sélectionner les 16 bits de poids fort d'une valeur parmi les deux valeurs selon le bit de sélection, puis une deuxième fois pour sélectionner les 16 bits de poids faible de cette même valeur, ou inversement. Les bits de poids fort et les bits de poids faible sélectionnés sont ensuite concaténés pour obtenir la valeur sélectionnée.

Le procédé comprend une étape 20 de concaténation dans laquelle les deux valeurs enregistrées dans les deux registres différents sont concaténées. La concaténation des deux valeurs permet d'obtenir un mot concaténé. Ce mot concaténé présente alors une première portion comportant une première valeur et une deuxième portion comportant la deuxième valeur. Les deux portions comprennent un même nombre de bits. Par exemple, chaque portion comprend 16 bits de sorte que le mot concaténé comporte 32 bits.

Le procédé comprend ensuite une étape 21 de rotation dans laquelle une opération de rotation est réalisée sur les bits du mot concaténé. L'opération de rotation est réalisée selon la valeur du bit de sélection. Par exemple, la rotation du mot concaténé est réalisée de manière à placer les bits de la valeur sélectionnée par le bit de sélection sur les bits de poids fort du mot concaténé. En particulier, lorsque le mot concaténé comprend deux portions de 16 bits, la rotation réalisée est une rotation de 16 bits ou de 32 bits selon la valeur du bit de sélection.

L'opération 21 de rotation du mot concaténé peut être réalisée en deux temps. En particulier, le procédé peut comprendre une première rotation 21a du mot concaténé selon un nombre M de bits prédéterminé. Le nombre M peut être compris entre 1 et 15 par exemple.

Ensuite, le procédé peut comprendre une deuxième rotation 21b du mot concaténé selon un nombre de bits dépendant du bits de sélection de manière à obtenir la valeur sélectionnée sur la portion à bits de poids forts du mot concaténé.

Par exemple, le nombre de bits de décalage pour la deuxième rotation est déterminé en réalisant tout d'abord une fonction logique OU entre la valeur du bit de sélection et une valeur égale à 0xN0000000 où N est compris entre 1 et F en système hexadécimal et est défini par rapport au nombre M de bits prédéterminés pour la première rotation. La fonction logique OU permet alors d'obtenir une valeur égale à 0xN0000000 lorsque le bit de sélection vaut 0, et 0xN0000001 lorsque le bit de sélection vaut 1. Une rotation de 28 bits vers la droite est ensuite réalisée de manière à obtenir une valeur égale à 0x0000000N lorsque le bit de sélection vaut 0 et à 0x0000001N.

Cette valeur calculée définit le nombre de bits de décalage pour la deuxième rotation.

La première rotation et la deuxième rotation permettent de réaliser une rotation du mot concaténé d'un nombre de bits égal à M+N₁₆ si le bit de sélection vaut 0 ou à M+(1N)₁₆. Les valeurs de M et N sont choisis pour que la somme M+N₁₆ soit égale à 16 (en système décimal) et pour que la somme M+(1N)₁₆ soit égale à 32 (en système décimal).

Le fait de réaliser une rotation 21 en deux temps (une première rotation 21a puis une deuxième rotation de 21b) permet d'éviter que la rotation soit directement de 0 bit (lorsque la rotation est de 32 bits) ou de 16 bits. La première rotation permet donc d'avoir une modification du mot concaténé quelle que soit la valeur du bit de sélection. De la sorte, la détermination du bit de sélection à partir d'une observation de la rotation est rendue plus complexe.

Une fois l'opération de rotation 21 effectuée sur le mot concaténé, la valeur sélectionnée par le bit de sélection se trouve sur une portion donnée du mot concaténé, par exemple les 16 bits de poids fort du mot concaténé, c'est-à-dire sur la première portion du mot concaténé. La valeur non sélectionnée par le bit de sélection se trouve alors sur les 16 bits de poids faible du mot concaténé, c'est-à-dire sur la deuxième portion du mot concaténé.

Le procédé comprend alors une étape 22 suppression dans laquelle la valeur non sélectionnée est supprimée du mot concaténé. En particulier, l'étape 22 de suppression peut par exemple comprendre une opération de décalage sur le mot concaténé de manière à garder uniquement la valeur sélectionnée par le bit de sélection. Par exemple, un décalage de 16 bits vers la droite est réalisé de manière à placer la valeur sélectionnée sur les 16 bits de poids faible du mot concaténé, c'est-à-dire sur la deuxième portion du mot concaténé. Ainsi, la valeur non sélectionnée est éliminée du mot concaténé pour garder uniquement la valeur sélectionnée dans le mot concaténé.

En variante, un masque peut être appliqué sur le mot concaténé pour supprimer la valeur non sélectionnée et conserver uniquement la valeur sélectionnée.

Un tel procédé de sélection présente l'avantage, au moins pour certaines architectures, de pouvoir être exécuté pendant un temps d'exécution qui est le même quelle que soit la valeur du bit de sélection. En effet, le procédé de sélection comprend la même séquence d'instructions à exécuter quelle que soit la valeur du bit de sélection.

Un tel procédé de sélection présente l'avantage d'être robuste contre les attaques par canal auxiliaire.

Les tableaux [Table 1] à [Table 4] illustrent différents exemples de mise en œuvre du procédé décrit précédemment. Ces tableaux montrent les instructions exécutées par l'ordinateur. Les instructions sont ici représentées en langage assembleur pour un processeur ARM Cortex^{®}-M3. Les tableaux [Table 1] et [Table 2] illustrent des exemples de mise en œuvre d'un même procédé lorsque la sélection est réalisée entre deux valeurs de 16 bits selon la valeur du bit de sélection. Les tableaux [Table 3] et [Table 4] illustrent des exemples de mise en œuvre d'un autre procédé dans lequel la sélection est réalisée entre deux valeurs de 32 bits selon la valeur du bit de sélection.

Le tableau [Table 1] illustre un exemple de mise en œuvre du procédé lorsque les deux valeurs v0 et v1 stockées initialement dans les registres r0 et r1 sont sur 16 bits, et lorsque la valeur du bit de sélection Sel_bit stocké initialement dans le registre r2 est égale à 0 de manière à sélectionner la valeur v0 stockée dans le registre r0.

**[Table 1]**

| **Sel_bit=0** | | | | |
|---|---|---|---|---|
| *N°* **Instruction** | **Instruction** | **Registre r0** | **Registre r1** | **Registre r2** |
| #0 | État initial | v0 | v1 | Sel_bit = 0 |
| #1 | EOR r0,r0,r1,LSL #16 | v1 ∥ v0 | | |
| #2 | ROR r0,r0, #1 | (v1 ∥ v0) >>> 1 | | |
| #3 | ORR r2,r2,=0xF0000000 | | | 0xF0000000 |
| #4 | ROR r2,r2,#28 | | | 0x0000000F = 15 |
| #5 | ROR r0,r0,r2 | v0 ∥ v1 | | |
| #6 | LSR r0,r0,#16 | v0 | | |

L'instruction #1 est une instruction « EOR r0, r0, r1, LSL#16 ». Cette instruction permet de concaténer les valeurs v0 et v1 stockées dans les registres r0 et r1 de manière à obtenir un mot concaténé v1∥v0 et permet d'enregistrer ce mot concaténé v1∥v0 dans le registre r0. En particulier, cette instruction permet de décaler de 16 bits vers la gauche, la valeur v1 représentée sur 16 bits avant d'effectuer une opération logique OU EXCLUSIF entre cette valeur v1 décalée avec la valeur v0 pour obtenir le mot concaténé v1∥v0. Le mot concaténé présente alors une première portion de 16 bits de poids fort comportant la valeur v1 et une deuxième portion de 16 bits de poids faible comportant la valeur v0.

L'instruction #2 est une instruction « ROR r0, r0, #1 ». Cette instruction permet de réaliser une opération de rotation de 1 bit vers la droite sur le mot concaténé v1∥v0 de manière à obtenir un mot concaténé décalé de 1 bit par rotation vers la droite (v1∥v0)>>>1. Ce mot concaténé décalé est enregistré dans le registre r0.

L'instruction #3 est une instruction « ORR r2, r2, =0xF0000000 ». Cette instruction permet d'effectuer une opération logique OU entre la valeur du bit de sélection Sel_bit stocké dans le registre r2 et la valeur 0xF0000000 (représentée ici selon le système hexadécimal), et permet d'enregistrer le résultat de cette opération dans le registre r2. La valeur du bit de sélection étant ici égale à 0, le résultat de l'opération logique OU est égale à 0xF0000000.

L'instruction #4 est une instruction « ROR r2, r2, #28 ». Cette instruction permet de réaliser une opération de rotation de 28 bits vers la droite sur le résultat de l'opération logique OU stockée dans le registre r2, et permet d'enregistrer le résultat de cette opération de rotation dans le registre r2. Ici, le résultat de l'opération de rotation est égal à 0x0000000F en système hexadécimal, c'est-à-dire 15 en système décimal.

L'instruction #5 est une instruction « ROR r0, r0, r2 ». Cette instruction permet de réaliser une opération de rotation vers la droite d'un nombre de bits correspondant à la valeur enregistrée dans le registre r2 (ici 0x0000000F, c'est-à-dire une rotation de 15 bits vers la droite) sur le mot concaténé décalé (v1∥v0)>>>1 stocké dans le registre r0, et permet d'enregistrer le résultat de cette opération de rotation dans le registre r0. Ici, le résultat de cette opération de rotation de 15 bits correspond au mot concaténé v0∥v1 qui présente une première portion de 16 bits de poids fort comprenant la valeur v0 et une deuxième portion de 16 bits de poids faible comprenant la valeur v1. Ainsi, ce résultat correspond à une rotation de 16 bits du mot concaténé v1∥v0.

L'instruction #6 correspond à une instruction « LSR r0, r0, #16 ». Cette instruction permet de réaliser une opération de décalage vers la droite de 16 bits sur le mot concaténé v0∥v1 résultant de l'opération de rotation, et permet d'enregistrer le résultat de cette opération de décalage dans le registre r0. Cette opération de décalage permet d'éliminer la valeur non sélectionnée v1 et de garder uniquement la valeur v0 sélectionnée.

Le tableau [Table 2] illustre un exemple de mise en œuvre du procédé lorsque les deux valeurs v0 et v1 stockées initialement dans les registre r0 et r1 sont sur 16 bits, et lorsque la valeur du bit de sélection Sel_bit stocké initialement dans le registre r2 est égale à 1 de manière à sélectionner la valeur v1.

**[Table 2]**

| **Sel_bit=1** | | | | |
|---|---|---|---|---|
| **N° Instruction** | **Instruction** | **Registre r0** | **Registre r1** | **Registre r2** |
| #0 | État initial | v0 | v1 | Sel_bit = 1 |
| #1 | EOR r0,r0,r1,LSL #16 | v1 ∥ v0 | | |
| #2 | ROR r0,r0, #1 | (v1 ∥ v0) >>> 1 | | |
| #3 | ORR r2,r2,=0xF0000000 | | | 0xF0000001 |
| #4 | ROR r2,r2,#28 | | | 0x0000001F = 31 |
| #5 | ROR r0,r0,r2 | v1 ∥ v0 | | |
| #6 | LSR r0,r0,#16 | v1 | | |

Les instructions sont identiques à celles décrites en relation avec le tableau [Table 1]. Néanmoins, les résultats des opérations réalisées par l'exécution de ces instructions diffèrent de ceux du tableau [Table 1] du fait que la valeur du bit de sélection est égale à 1 et non plus 0.

En particulier, le résultat de l'opération logique OU de l'instruction #3 est égal à 0xF0000001, et non plus 0xF0000000. Ainsi, le résultat de l'opération de rotation de l'instruction #4 est égal à 0x0000001F, c'est-à-dire 31 en système décimal.

L'opération de rotation réalisée par l'instruction #5 est donc une rotation sur 31 bits, et non plus sur 15 bits. Ainsi, le résultat de cette opération de rotation correspond au mot concaténé v1∥v0. Ce mot concaténé v1∥v0 présente une première portion de 16 bits de poids fort comprenant la valeur v1 et une deuxième portion de 16 bits de poids faible comprenant la valeur v0. Ce résultat correspond à une rotation de 32 bits du mot concaténé v1∥v0 obtenu après l'exécution de l'instruction #2.

Par conséquent, le résultat de l'opération de décalage de l'instruction #6 est égal à la valeur v1 sélectionnée.

Les instructions exécutées sont les mêmes quelle que soit la valeur du bit de sélection. Ainsi, le temps d'exécution du procédé est le même quelle que soit la valeur du bit de sélection sur une architecture où le temps d'exécution des instructions utilisées est constant. Cela permet de complexifier l'identification de la valeur du bit de sélection pour un attaquant.

En outre, la valeur du registre r2 diffère seulement d'un bit selon les valeurs du bit de sélection. Il est ainsi complexe pour un attaquant d'identifier un changement dans le registre r2 selon le bit de sélection. Il est donc complexe d'identifier la valeur du bit de sélection par l'observation du registre r2.

De plus, comme indiqué précédemment, le fait de réaliser une rotation du mot concaténé en deux temps (une première rotation de 1 bit puis une deuxième rotation de 15 ou 31 bits) permet d'éviter que la rotation soit directement de 0 ou de 16. En particulier, une rotation de 0 pourrait être détecté par un attaquant. La rotation du mot concaténé en deux temps permet de complexifier l'identification de la valeur du bit de sélection.

Par ailleurs, le procédé permet de conserver un poids de Hamming constant dans le registre r0 jusqu'à l'instruction #6. En d'autres termes, le procédé permet de conserver un même nombre de bits à 1 dans les valeurs du registre. De ce fait l'identification de la valeur du bit de sélection est complexifiée pour un attaquant.

Les tableaux [Table 3] et [Table 4] illustrent des exemples de mise en œuvre d'un procédé de sélection entre deux valeurs de 32 bits selon la valeur du bit de sélection.

Le tableau [Table 3] illustre un exemple de mise en œuvre du procédé lorsque les deux valeurs v0 et v1 stockées initialement dans les registre r0 et r1 sont représentées sur 32 bits, et lorsque la valeur du bit de sélection Sel_bit stocké initialement dans le registre r2 est égale à 0 de manière à sélectionner la valeur v0 stockée dans le registre r0. La valeur v0 comprend 16 bits v0^{H} de poids fort et 16 bits v0^{L} de poids faible. La valeur v1 comprend 16 bits v1^{H} de poids fort et 16 bits v1^{L} de poids faible.

**[Table 3]**

| **Sel_bit=0** | | | | | |
|---|---|---|---|---|---|
| **N° Instruction** | **Instruction** | **Registre r0** | **Registre r1** | **Registre r2** | **Registre r3** |
| #0 | État initial | v0 = v0^{H} ∥ v0^{L} | v1 = v1^{H} ∥ v1^{L} | Sel_bit = 0 | |
| #1 | UXTH r3,r0 | | | | v0^{L} |
| #2 | EOR r3,r3,r1,LSL #16 | | | | v1^{L} ∥ v0^{L} |
| #3 | ROR r3,r3,#1 | | | | (v1^{L} ∥ v0^{L}) >>> 1 |
| #4 | UXTH r0,r0,ROR #16 | v0^{H} | | | |
| #5 | LSL r0,r0,#16, | v0^{H} ∥ 0 | | | |
| #6 | EOR r1,r0,r1,LSR #16 | | v0^{H} ∥ v1^{H} | | |
| #7 | ROR r1,r1,#1 | | (v0^{H} ∥ v1^{H}) >>> 1 | | |
| #8 | ORR r2,r2,#0xF0000000 | | | 0xF0000000 | |
| #9 | ROR r2,r2,#28 | | | 0x0000000F = 15 | |
| #10 | ROR r1,r1,r2 | | v1^{H} ∥ v0^{H} | | |
| #11 | ROR r3,r3,r2 | | | | v0^{L} ∥ v1^{L} |
| #12 | LSL r1,r1,#16 | | v0^{H} | | |
| #13 | EOR r0,r1,r3,LSR #16 | v0 = v0^{H} ∥ v0^{L} | | | |

L'instruction #1 est une instruction « UXTH r3, r0 ». Cette instruction permet de mettre à zéro les 16 bits de poids fort de la valeur v0 et d'enregistrer le résultat de cette opération dans le registre r3. Le résultat de cette opération permet de récupérer seulement les 16 bits de poids faible v0^{L} de la valeur v0.

L'instruction #2 est une instruction « EOR r3, r3, r1, LSL#16 ». Cette instruction permet de concaténer les bits de poids faible v1^{L} et v0^{L} des valeurs v1 et v0 stockées dans les registres r1 et r0 de manière à obtenir un premier mot concaténé v1^{L}∥v0^{L} et permet d'enregistrer ce mot concaténé v1^{L}∥v0^{L} dans le registre r3. En particulier, cette instruction permet de décaler de 16 bits vers la gauche la valeur v1^{L} avant d'effectuer une opération logique OU EXCLUSIF entre cette valeur v1^{L} décalée et la valeur v0^{L} pour obtenir le mot concaténé v1^{L}∥v0^{L}. Le mot concaténé v1^{L}∥v0^{L} présente alors une première portion de 16 bits de poids fort comportant les 16 bits de poids faible v1^{L} de la valeur v1 et une deuxième portion de 16 bits de poids faible comportant les 16 bits de poids faible v0^{L} de la valeur v0.

L'instruction #3 est une instruction « ROR r3, r3, #1 ». Cette instruction permet de réaliser une opération de rotation de 1 bit vers la droite sur le mot concaténé v1^{L}∥v0^{L} de manière à obtenir un mot concaténé décalé de 1 bit par rotation vers la droite (v1^{L}∥v0^{L})>>>1. Ce mot concaténé décalé est stocké dans le registre r3.

L'instruction #4 est une instruction « UXTH r0, r0, ROR#16 ». Cette instruction permet d'effectuer une rotation de 16 bits vers la droite de la valeur v0 de manière à inverser les valeurs v0^{H} des bits de poids fort avec les valeurs v0^{L} des bits de poids faible de la valeur v0, avant de mettre à zéro les 16 bits de poids fort du résultat de la rotation et d'enregistrer le résultat de cette opération dans le registre r0. Le résultat de cette opération permet de récupérer seulement les 16 bits de poids fort v0^{H} de la valeur v0.

L'instruction #5 est une instruction LSL r0,r0,#16. Cette instruction permet de décaler de 16 bits vers la gauche la valeur v0^{H}. Le résultat de cette opération est alors le mot concaténé v0^{H}||0.

L'instruction #6 est une instruction « EOR r1, r0, r1, LSR#16 ». Cette instruction permet de concaténer les bits de poids fort v0^{H} et v1^{H} des valeurs v0 et v1 de manière à obtenir un deuxième mot concaténé v0^{H}∥v1^{H}, et permet d'enregistrer ce mot concaténé v0^{H}∥v1^{H} dans le registre r1. En particulier, cette instruction permet d'isoler les 16 bits de poids fort de v1 en décalant v1 de 16 bits vers la droite avant d'effectuer une opération logique OU EXCLUSIF entre la valeur v0^{H}∥0 et la valeur v1^{H} pour obtenir le mot concaténé v0^{H}∥v1^{H}. Le mot concaténé v0^{H}∥v1^{H} présente alors une première portion de 16 bits de poids fort comportant les 16 bits de poids fort v0^{H} de la valeur v0 et une deuxième portion de 16 bits de poids faible comportant les 16 bits de poids fort v1^{H} de la valeur v1.

L'instruction #7 est une instruction « ROR r1, r1, #1 ». Cette instruction permet de réaliser une opération de rotation de 1 bit vers la droite sur le mot concaténé v0^{H}∥v1^{H} de manière à obtenir un mot concaténé décalé de 1 bit par rotation vers la droite (v0^{H}∥v1^{H}). Ce mot concaténé décalé est stocké dans le registre r1.

L'instruction #8 est une instruction « ORR r2, r2, =0xF0000000 ». Cette instruction permet d'effectuer une opération logique OU entre la valeur du bit de sélection Sel_bit stocké dans le registre r2 et la valeur 0xF0000000 (représentée ici selon le système hexadécimal), et permet d'enregistrer le résultat de cette opération dans le registre r2. La valeur du bit de sélection étant ici égale à 0, le résultat de l'opération logique OU est égale à 0xF0000000.

L'instruction #9 est une instruction « ROR r2, r2, #28 ». Cette instruction permet de réaliser une opération de rotation de 28 bits vers la droite sur le résultat de l'opération logique OU stockée dans le registre r2, et permet d'enregistrer le résultat de cette opération de rotation dans le registre r2. Ici, le résultat de l'opération de rotation est égal à 0x0000000F en système hexadécimal, c'est-à-dire 15 en système décimal.

L'instruction #10 est une instruction « ROR r1, r1, r2 ». Cette instruction permet de réaliser une opération de rotation vers la droite d'un nombre de bits correspondant à la valeur stockée dans le registre r2 (ici 0x0000000F, c'est-à-dire une rotation de 15 bits vers la droite) sur le mot concaténé décalé (v0^{H}∥v1^{H})>>>1 stocké dans le registre r1, et permet d'enregistrer le résultat de cette opération de rotation dans le registre r1. Ici, le résultat de cette opération de rotation de 15 bits correspond au mot concaténé v1^{H}∥v0^{H} qui présente une première portion de 16 bits de poids fort comprenant les 16 bits de poids fort v1^{H} de la valeur v1 et une deuxième portion de 16 bits de poids faible comprenant les 16 bits de poids fort v0^{H} de la valeur v0. Ainsi, ce résultat correspond à une rotation de 16 bits du mot concaténé v0^{H}∥v1^{H}.

L'instruction #11 est une instruction « ROR r3, r3, r2 ». Cette instruction permet de réaliser une opération de rotation vers la droite d'un nombre de bits correspondant à la valeur stockée dans le registre r2 (ici 0x0000000F, c'est-à-dire une rotation de 15 bits vers la droite) sur le mot concaténé décalé (v1^{L}∥v0^{L})>>>1 stocké dans le registre r3, et permet d'enregistrer le résultat de cette opération de rotation dans le registre r3. Ici, le résultat de cette opération de rotation de 15 bits correspond au mot concaténé v0^{L}∥v1^{L} qui présente une première portion de 16 bits de poids fort comprenant les 16 bits de poids faible v0^{L} de la valeur v0 et une deuxième portion de 16 bits de poids faible comprenant les 16 bits de poids faible v1^{L} de la valeur v1. Ainsi, ce résultat correspond à une rotation de 16 bits du mot concaténé v1^{L}∥v0^{L}.

L'instruction #12 correspond à une instruction « LSL r1, r1, #16 ». Cette instruction permet de réaliser une opération de décalage vers la gauche de 16 bits sur le mot concaténé v1^{H}∥v0^{H} résultant de l'opération de rotation, et permet d'enregistrer le résultat de cette opération de décalage dans le registre r1. Cette opération de décalage permet d'éliminer la valeur non sélectionnée v1^{H} et de garder uniquement la valeur v0^{H} sélectionnée.

L'instruction #13 correspond à une instruction « EOR r0, r1, r3, LSR #16 ». Cette instruction permet de concaténer les 16 bits de poids fort v0^{H} et les 16 bits de poids faible v0^{L} de la valeur v0 pour récupérer cette valeur v0 sélectionnée, et permet d'enregistrée cette valeur v0 récupérée dans le registre r0. En particulier, cette instruction permet tout d'abord de décaler de 16 bits vers la droite le mot concaténé v0^{L}∥v1^{L} du registre r3 pour obtenir v0^{L} avant d'effectuer une opération logique OU EXCLUSIF avec la valeur v0^{H} pour obtenir le mot concaténé v0^{H}∥v0^{L} correspondant à la valeur v0 sélectionnée.

Le tableau [Table 4] illustre un exemple de mise en œuvre du procédé lorsque les deux valeurs v0 et v1 stockées initialement dans les registre r0 et r1 sont représentées sur 32 bits, et lorsque la valeur du bit de sélection Sel_bit stocké initialement dans le registre r2 est égale à 1 de manière à sélectionner la valeur v1 stockée dans le registre r1.

**[Table 4]**

| **Sel_bit=1** | | | | | |
|---|---|---|---|---|---|
| N° **Instruction** | **Instruction** | **Registre r0** | **Registre r1** | **Registre r2** | **Registre r3** |
| #0 | État initial | v0 = v0^{H} ∥ v0^{L} | v1 = v1^{H} ∥ v1^{L} | Sel_bit = 1 | |
| #1 | UXTH r3,r0 | | | | v0^{L} |
| #2 | EOR r3,r3,r1,LSL #16 | | | | v1^{L} ∥ v0^{L} |
| #3 | ROR r3,r3,#1 | | | | (v1^{L} ∥ v0^{L}) >>> 1 |
| #4 | UXTH r0,r0,ROR #16 | v0^{H} | | | |
| #5 | LSL r0,r0,#16 | v0^{H} ∥ 0 | | | |
| #6 | EOR r1,r0,r1,LSR #16 | | v0^{H} ∥ v1^{H} | | |
| #7 | ROR r1,r1,#1 | | (v0^{H} ∥ v1^{H}) >>> 1 | | |
| #8 | ORR r2,r2,#0xF0000000 | | | 0xF0000001 | |
| #9 | ROR r2,r2,#28 | | | 0x0000001F = 31 | |
| #10 | ROR r1,r1,r2 | | v0^{H} ∥ v₁^{H} | | |
| #11 | ROR r3,r3,r2 | | | | v1^{L} ∥ v0^{L} |
| #12 | LSL r1,r1,#16 | | v1^{H} | | |
| #13 | EOR r0,r1,r3,LSR #16 | v1 = v1^{H} ∥ v1^{L} | | | |

Les instructions sont identiques à celles décrites en relation avec le tableau [Table 3]. Néanmoins, les résultats des opérations réalisées par l'exécution de ces instructions diffèrent de ceux du tableau [Table 3] du fait que la valeur du bit de sélection est égale à 1 et non plus 0.

En particulier, le résultat de l'opération logique OU de l'instruction #8 est égal à 0xF0000001, et non plus 0xF0000000. Ainsi, le résultat de l'opération de rotation de l'instruction #9 est égal à 0x0000001F, c'est-à-dire 31 en système décimal.

Les opérations de rotation réalisées par les instructions #10 et #11 sont donc des rotations sur 31 bits, et non plus sur 15 bits.

Plus particulièrement, le résultat de l'opération de rotation de l'instruction #10 correspond donc au mot concaténé v0^{H}∥v1^{H}. Ce mot concaténé v0^{H} ∥v1^{H} présente une première portion de 16 bits de poids fort comprenant les 16 bits de poids fort v0^{H} de la valeur v0 et une deuxième portion de 16 bits de poids faible comprenant les 16 bits de poids fort v1^{H} de la valeur v1. Ce résultat correspond à une rotation de 32 bits du mot concaténé v0^{H}∥v1^{H} obtenu après l'exécution de l'instruction #6.

Le résultat de l'opération de rotation de l'instruction #11 correspond donc au mot concaténé v1^{L}∥v0^{L}. Ce mot concaténé v1^{L}∥v0^{L} présente une première portion de 16 bits de poids fort comprenant les 16 bits de poids faible v1^{L} de la valeur v1 et une deuxième portion de 16 bits de poids faible comprenant les 16 bits de poids faible v0^{L} de la valeur v0. Ce résultat correspond à une rotation de 32 bits du mot concaténé v1^{L}∥v0^{L} obtenu après l'exécution de l'instruction #2.

Par conséquent, le résultat de l'opération de décalage de l'instruction #12 est égal aux 16 bits de poids fort v1^{H} de la valeur v1 sélectionnée, et le résultat de l'opération OU EXCLUSIF de l'instruction #13 donne comme résultat le mot concaténé v1^{H}∥ v1^{L} correspondant à la valeur sélectionnée v1.

Les procédés de sélection décrits peuvent être mis en œuvre dans le cadre d'un procédé de cryptographie. En particulier, les procédés de sélection décrits peuvent être implémentés dans les cryptosystèmes « RSA » et « ElGamal », les algorithmes « DSA » (acronyme de l'anglais « Digital Signature Algorithm ») et « ECDSA » (acronyme de l'anglais « Elliptic curve digital signature algorithm »), et le protocole « ECDH » (acronyme de l'anglais « Elliptic-curve Diffie-Hellman »). Par exemple, les procédés de sélection décrits peuvent être mis en œuvre dans un algorithme d'échelle de Montgomery.

Plus particulièrement, le bit de sélection peut être un bit d'une clé cryptographique que l'utilisateur souhaite maintenir secret. Par exemple, une telle sélection peut être mise en œuvre pour calculer une exponentiation modulaire ou une multiplication scalaire selon un bit de la clé cryptographique.

La figure 2 illustre un mode de réalisation d'un système informatique SYS, tel qu'un système sur puce par exemple. Le système informatique SYS comprend une unité de traitement UT et une mémoire MEM dans laquelle est stocké un programme d'ordinateur PRG. L'unité de traitement UT présente une architecture supportant une rotation du contenu de registre.

Le programme d'ordinateur PRG comprend des instructions qui, lorsque le programme est exécuté par l'unité de traitement UT, conduisent celui-ci à mettre en œuvre un procédé de sélection tel que ceux décrits précédemment.

## Revendications

1. Procédé mis en œuvre par ordinateur de sélection d'une valeur parmi deux valeurs enregistrées dans deux registres différents à partir d'un bit de sélection, le procédé comprenant :
- une concaténation (20) des deux valeurs enregistrées dans les deux registres de manière à obtenir un mot concaténé présentant lesdites deux valeurs dans deux portions distinctes du mot concaténé, puis
- une rotation (21, 21a, 21b) dudit mot concaténé selon la valeur du bit de sélection de manière à positionner la valeur sélectionnée dans une portion donnée du mot concaténé parmi lesdites deux portions, puis
- une suppression (22) de la valeur non sélectionnée dans le mot concaténé de manière à conserver uniquement la valeur sélectionnée dans le mot concaténé en éliminant la valeur non sélectionnée du mot concaténé.

2. Procédé selon la revendication 1, dans lequel ladite suppression de la valeur non sélectionnée dans le mot concaténé comprend un décalage (22) du mot concaténé de manière à conserver uniquement la valeur sélectionnée dans le mot concaténé en éliminant la valeur non sélectionnée du mot concaténé.

3. Procédé selon l'une quelconque des revendications 1 ou 2, dans lequel la concaténation permet de concaténer deux valeurs sur 16 bits de manière à obtenir un mot concaténé de 32 bits dans lequel les deux valeurs sont comprises dans deux portions de 16 bits du mot concaténé.

4. Procédé selon la revendication 3, dans lequel ladite rotation dudit mot concaténé comprend :
- une première rotation (21a) du mot concaténé selon un nombre M de bits prédéterminé, M étant différent de 0 et d'un multiple de 16, puis
- une deuxième rotation (21b) du mot concaténé selon un nombre de bits dépendant du bit de sélection de manière à obtenir la valeur sélectionnée sur ladite portion donnée.

5. Procédé selon la revendication 4, dans lequel le nombre de bits de décalage pour la deuxième rotation est déterminé en réalisant :
- une fonction logique OU entre la valeur du bit de sélection et une valeur égale à 0xN0000000 où N est compris entre 1 et F en système hexadécimal et est défini par rapport au nombre M de bits prédéterminé pour la première rotation, puis
- une rotation de 28 bits sur la valeur obtenue par la fonction logique OU de manière à obtenir une valeur du nombre de bits de décalage pour la deuxième rotation.

6. Produit programme d'ordinateur comprenant des instructions qui, lorsque ces instructions sont exécutées par un ordinateur, conduisent celui-ci à mettre en œuvre un procédé selon l'une des revendications 1 à 5.

7. Système informatique comprenant :
- une mémoire dans laquelle est stocké un produit programme d'ordinateur selon la revendication 6, et
- une unité de traitement configurée pour exécuter ledit produit programme d'ordinateur.

## Patentansprüche

1. Computerimplementiertes Verfahren zum Auswählen eines Wertes aus zwei Werten, die in zwei unterschiedlichen Registern gespeichert sind, auf Grundlage eines Auswahlbits, wobei das Verfahren umfasst:
- Verketten (20) der zwei Werte, die in den zwei Registern gespeichert sind, um ein verkettetes Wort zu erhalten, das die zwei Werte in zwei getrennten Abschnitten des verketteten Wortes aufweist, danach
- Drehen (21, 21a, 21b) des verketteten Wortes gemäß dem Wert des Auswahlbits, um den ausgewählten Wert in einem gegebenen Abschnitt des verketteten Wortes aus den zwei Abschnitten zu positionieren, danach
- Löschen (22) des nicht ausgewählten Werts in dem verketteten Wort, um nur den ausgewählten Wert in dem verketteten Wort zu behalten, indem der nicht ausgewählte Wert aus dem verketteten Wort eliminiert wird.

2. Verfahren nach Anspruch 1, wobei das Löschen des nicht ausgewählten Werts in dem verketteten Wort ein Verschieben (22) des verketteten Wortes umfasst, um nur den ausgewählten Wert in dem verketteten Wort zu behalten, indem der nicht ausgewählte Wert aus dem verketteten Wort eliminiert wird.

3. Verfahren nach einem der Ansprüche 1 oder 2, wobei das Verketten es ermöglicht, zwei Werte mit 16 Bit zu verketten, um ein verkettetes 32-Bit-Wort zu erhalten, in dem die zwei Werte in zwei 16-Bit-Abschnitten des verketteten Wortes umfasst sind.

4. Verfahren nach Anspruch 3, wobei das Drehen des verketteten Wortes umfasst:
- ein erstes Drehen (21a) des verketteten Wortes gemäß einer vorbestimmten Anzahl M von Bits, wobei M ungleich 0 und eines Vielfachen von 16 ist, danach
- ein zweites Drehen (21b) des verketteten Worts gemäß einer Anzahl von Bits, die vom Auswahlbit abhängt, um den ausgewählten Wert in dem gegebenen Abschnitt zu erhalten.

5. Verfahren nach Anspruch 4, wobei die Anzahl an Verschiebebits für die zweite Drehung bestimmt wird durch Ausführen:
- einer logischen ODER-Funktion zwischen dem Wert des Auswahlbits und einem Wert gleich 0xN0000000, wobei N zwischen 1 und F im Hexadezimalsystem liegt und in Bezug auf die vorbestimmte Anzahl M von Bits für die erste Drehung definiert ist, danach
- einer Drehung von 28 Bits an dem Wert, der durch die logische ODER-Funktion erhalten wird, um einen Wert der Anzahl von Verschiebebits für die zweite Drehung zu erhalten.

6. Computerprogrammprodukt, das Anweisungen umfasst, die, wenn diese Anweisungen von einem Computer ausgeführt werden, diesen dazu bringen, ein Verfahren nach einem der Ansprüche 1 bis 5 zu implementieren.

7. Informatiksystem, umfassend:
- einen Speicher, in dem ein Computerprogrammprodukt nach Anspruch 6 gespeichert ist, und
- eine Verarbeitungseinheit, die dafür konfiguriert ist, das Computerprogrammprodukt auszuführen.

## Claims

1. A computer-implemented method for selecting one of two values stored in two different registers from a selection bit, the method comprising:
- concatenating (20) the two values stored in the two registers so as to obtain a concatenated word presenting said two values in two distinct portions of the concatenated word, then
- rotating (21, 21a, 21b) said concatenated word according to the value of the selection bit so as to position the selected value in a given portion of the concatenated word from said two portions, then
- deleting (22) of the unselected value in the concatenated word so as to keep only the selected value in the concatenated word by eliminating the unselected value from the concatenated word.

2. The method according to claim 1, wherein said deletion of the unselected value in the concatenated word comprises shifting (22) the concatenated word so as to keep only the selected value in the concatenated word by eliminating the unselected value of the concatenated word.

3. The method according to any one of claims 1 or 2, wherein the concatenation allows concatenating two values over 16 bits so as to obtain a 32-bit concatenated word in which the two values are comprised in two 16-bit portions of the concatenated word.

4. The method according to claim 3, wherein said rotation of said concatenated word comprises:
- a first rotation (21a) of the concatenated word according to a predetermined number M of bits, M being different from 0 and a multiple of 16, then
- a second rotation (21b) of the concatenated word according to a number of bits depending on the selection bit so as to obtain the value selected on said given portion.

5. The method according to claim 4, wherein the number of shift bits for the second rotation is determined by carrying out:
- a logical OR function between the value of the selection bit and a value equal to 0xN0000000 where N is comprised between 1 and F in hexadecimal system and is defined relative to the predetermined number M of bits for the first rotation, then
- a rotation of 28 bits on the value obtained by the logical function OR so as to obtain a value of the number of shift bits for the second rotation.

6. A computer programme product comprising instructions which, when these instructions are executed by a computer, lead said computer to implement a method according to one of claims 1 to 5.

7. A computer system comprising:
- a memory in which a computer program product according to claim 6 is stored, and
- a processing unit configured to execute said computer program product.
